# EUROPEAN PATENT APPLICATION

(11) **EP 4 510 673 A1**
(43) Date of publication of application: **19.02.2025**
(21) Application number: 23787828.5
(22) Date of filing: 14.04.2023
(51) Int. Cl.: H04W 16/22

(54) **MODEL DETERMINING METHOD AND APPARATUS, INFORMATION TRANSMISSION METHOD AND APPARATUS, AND RELATED DEVICE**

(30) Priority: 15.04.2022 CN 202210399393
(71) Applicant: VIVO MOBILE COMMUNICATION CO., LTD., Dongguan, Guangdong 523863 (CN)
(72) Inventor: SUN, Bule, Dongguan, Guangdong 523863 (CN); YANG, Ang, Dongguan, Guangdong 523863 (CN); SUN, Peng, Dongguan, Guangdong 523863 (CN); LI, Jialin, Dongguan, Guangdong 523863 (CN)
(74) Representative: Conti, Marco
(86) International application number: PCT/CN2023/088358
(87) International publication number: WO 2023/198186

(57) **Abstract**

This application pertains to the field of communication technologies, and discloses a model determining method and apparatus, an information transmission method and apparatus, and a related device. The model determining method in embodiments of this application includes: running, by a first device, a plurality of artificial intelligence AI models in parallel, where functions implemented by models in the plurality of AI models are the same; evaluating, by the first device, running results of the plurality of AI models running in parallel, to obtain an evaluation result; and determining, by the first device, a target model from the plurality of AI models based on the evaluation result.

## Description

### CROSS-REFERENCE TO RELATED APPLICATIONS

This application claims priority to Chinese Patent Application No. 202210399393.2, filed in China on April 15, 2022, which is incorporated herein by reference in its entirety.

### TECHNICAL FIELD

This application pertains to the field of communication technologies, and specifically relates to a model determining method and apparatus, an information transmission method and apparatus, and a related device.

### BACKGROUND

During deployment of a new artificial intelligence (Artificial Intelligence, AI) model in a wireless communication system, a plurality of candidate models may exist. In this case, it is necessary to evaluate the candidate models before determining whether deployment is required and which model is to be deployed. In addition, during fine tuning of a deployed model, it is also necessary to evaluate the fine-tuned model before determining whether to deploy the fine-tuned model. During deployment of the new model or fine tuning of the model, another model (old model or standby model) that resolves a same problem may be running in the system. If the selected model is inappropriate, a waste of transmission resources and computing resources is caused, and performance is degraded.

### SUMMARY

Embodiments of this application provide a model determining method and apparatus, an information transmission method and apparatus, and a related device to resolve a problem that an inappropriate model selection causes low device performance in a case that a plurality of AI models exist.

According to a first aspect, a model determining method is provided. The method includes:
running, by a first device, a plurality of artificial intelligence AI models in parallel, where functions implemented by models in the plurality of AI models are the same;
evaluating, by the first device, running results of the plurality of AI models running in parallel, to obtain an evaluation result; and
determining, by the first device, a target model from the plurality of AI models based on the evaluation result.

According to a second aspect, an information transmission method is provided. The method includes:
sending, by a second device, first information to a first device, where the first information is used to instruct the first device to run a plurality of AI models in parallel, and functions implemented by models in the plurality of AI models are the same; or
receiving, by a second device, second information sent by a first device, where the second information is used to indicate that the first device runs the plurality of AI models in parallel.

According to a third aspect, a model determining apparatus is provided and includes:
a running module, configured to run a plurality of artificial intelligence AI models in parallel, where functions implemented by models in the plurality of AI models are the same;
a determining module, configured to evaluate running results of the plurality of AI models running in parallel, to obtain an evaluation result; and
a selection module, configured to determine a target model from the plurality of AI models based on the evaluation result.

According to a fourth aspect, an information transmission apparatus is provided and includes:
a first sending module, configured to send first information to a first device, where the first information is used to instruct the first device to run a plurality of AI models in parallel, and functions implemented by models in the plurality of AI models are the same; or
a first receiving module, configured to receive second information sent by a first device, where the second information is used to indicate that the first device runs the plurality of AI models in parallel.

According to a fifth aspect, a first device is provided and includes a processor and a communication interface. The processor is configured to: run a plurality of artificial intelligence AI models in parallel, where functions implemented by models in the plurality of AI models are the same; evaluate running results of the plurality of AI models running in parallel, to obtain an evaluation result; and determine a target model from the plurality of AI models based on the evaluation result.

According to a sixth aspect, a second device is provided and includes a processor and a communication interface. The communication interface is configured to: send first information to a first device, where the first information is used to instruct the first device to run a plurality of AI models in parallel, and functions implemented by models in the plurality of AI models are the same; or
receive second information sent by a first device, where the second information is used to indicate that the first device runs the plurality of AI models in parallel.

According to a seventh aspect, a communication system is provided and includes a first device and a second device. The first device is configured to perform the method according to the first aspect, and the second device is configured to perform the method according to the second aspect.

According to an eighth aspect, a first device is provided and includes a processor and a memory. The memory stores a program or instructions capable of running on the processor. When the program or instructions are executed by the processor, the model determining method according to the first aspect is implemented.

According to a ninth aspect, a second device is provided and includes a processor and a memory. The memory stores a program or instructions capable of running on the processor. When the program or instructions are executed by the processor, the information transmission method according to the second aspect is implemented.

According to a tenth aspect, a readable storage medium is provided. The readable storage medium stores a program or instructions. When the program or instructions are executed by a processor, the steps of the method according to the first aspect or the second aspect are implemented.

According to an eleventh aspect, a chip is provided. The chip includes a processor and a communication interface. The communication interface is coupled to the processor. The processor is configured to run a program or instructions to implement the steps of the method according to the first aspect or the second aspect.

According to a twelfth aspect, a computer program or program product is provided. The computer program or program product is stored in a storage medium. The computer program or program product is executed by at least one processor to implement the steps of the method according to the first aspect or the second aspect.

In the embodiments, in a case that the plurality of AI models exist, the first device runs the plurality of AI models in parallel, evaluates the running results of the plurality of AI models running in parallel, and determines the target model from the plurality of AI models. In this way, a waste of transmission resources and computing resources caused by an inappropriate model selection can be avoided, and device performance can be improved.

### BRIEF DESCRIPTION OF DRAWINGS

FIG. 1 is a block diagram of a wireless communication system to which an embodiment of this application may be applied;
FIG. 2 is a flowchart of a model determining method according to an embodiment of this application;
FIG. 3 is a flowchart of an information transmission method according to an embodiment of this application;
FIG. 4 is a structural diagram of a model determining apparatus according to an embodiment of this application;
FIG. 5 is a structural diagram of an information transmission apparatus according to an embodiment of this application;
FIG. 6 is a structural diagram of a terminal according to an embodiment of this application;
FIG. 7 is a structural diagram of a communication device according to an embodiment of this application; and
FIG. 8 is a structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6th Generation, 6G) communication system.

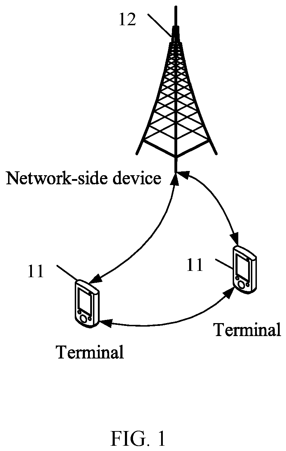

FIG. 1 is a block diagram of a wireless communication system to which an embodiment of this application may be applied. The wireless communication system includes a terminal 11 and a network-side device 12. The terminal 11 may be a terminalside device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), vehicle user equipment (Vehicle User Equipment, VUE), pedestrian user equipment (Pedestrian User Equipment, PUE), a smart home (a home device having a wireless communication function, such as a refrigerator, a television, a washing machine, or furniture), a game console, a personal computer (personal computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, or the like. It should be noted that a specific type of the terminal 11 is not limited in the embodiments of this application. The network-side device 12 may include an access network device or a core network device. The access network device may also be referred to as a radio access network device, a radio access network (Radio Access Network, RAN), a radio access network function, or a radio access network element. The access network device may include a base station, a wireless local area network (Wireless Local Area Network, WLAN) access point, a Wi-Fi node, or the like. The base station may be referred to as a NodeB, an evolved NodeB (Evolved NodeB, eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmission and Reception Point, TRP), or another appropriate term in the art. As long as the same technical effect is achieved, the base station is not limited to specific technical terms. It should be noted that in the embodiments of this application, only a base station in an NR system is used as an example for description, but a specific type of the base station is not limited.

A method provided in the embodiments of this application is hereinafter described in detail by using some embodiments and application scenarios thereof with reference to the accompanying drawings.

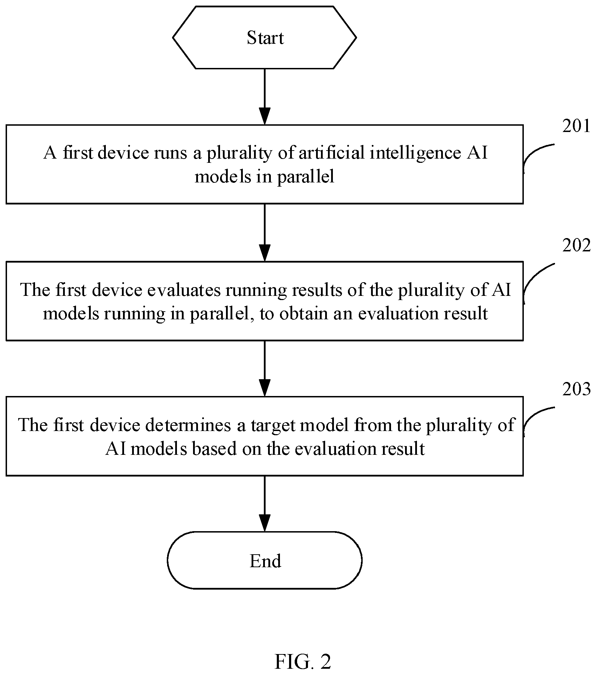

As shown in FIG. 2, an embodiment of this application provides a model determining method. The method includes the following steps.

Step 201: A first device runs a plurality of artificial intelligence AI models in parallel, where functions implemented by models in the plurality of AI models are the same.

Step 202: The first device evaluates running results of the plurality of AI models running in parallel, to obtain an evaluation result.

Step 203: The first device determines a target model from the plurality of AI models based on the evaluation result.

Specifically, the plurality of AI models refer to two or more AI models, and that functions implemented by models are the same may be understood as: the AI models can resolve a same problem. The first device may be a first terminal, and parallel running of the plurality of artificial intelligence AI models may be triggered by the first device autonomously. For example, the first device runs the plurality of artificial intelligence AI models in parallel at intervals of a preset time period or when a target event is detected. Alternatively, the parallel running may be triggered based on an instruction of a second device. The second device may be a network-side device or a second terminal. For example, the second device sends, to the first device, first information used to instruct the first device to run the plurality of AI models in parallel, and the first device triggers the parallel running of the plurality of AI models based on the first information.

Optionally, the models in the plurality of AI models running in parallel include a same input. Specifically, the plurality of AI models run by using the same input to obtain the running results of the plurality of AI models, so as to obtain the evaluation result by evaluating the running results of the plurality of AI models. Based on the evaluation result, performance of an AI model may be determined. For example, the evaluation result is used as a performance indicator of the AI model, so that a target model with best performance can be determined from the plurality of AI models.

In this embodiment, in a case that the plurality of AI models exist, the first device runs the plurality of AI models in parallel, evaluates the running results of the plurality of AI models running in parallel, to obtain the evaluation result; and determines the target model from the plurality of AI models based on the evaluation result. In this way, the selected target model can be a model with the best performance in the plurality of AI models. Therefore, a waste of transmission resources and computing resources caused by an inappropriate model selection can be avoided, and device performance can be improved.

In an embodiment of this application, that a first device runs a plurality of AI models in parallel includes:
the first device runs the plurality of AI models in parallel based on a trigger condition, where the trigger condition includes at least one of the following:
   (1) at intervals of a preset time period;
   (2) first information sent by the second device is received, where the first information is used to instruct the first device to run the plurality of AI models in parallel; and
   (3) a target event is detected.

The target event includes one of the following:
(1) first performance of a first AI model currently used by the first device is less than or equal to a first threshold, where the first AI model is a model in the plurality of AI models, and an AI model with high first performance is better than an AI model with low first performance;
(2) a first statistical count is greater than or equal to a first count threshold, where the first statistical count is a count of times that the first performance of the first AI model is less than or equal to a second threshold in a first preset time period;
(3) a second statistical count is less than or equal to a second count threshold, where the second statistical count is a count of times that the first performance of the first AI model is greater than or equal to a third threshold in a second preset time period;
(4) first duration is greater than or equal to a first time threshold, where the first duration is duration in which the first performance of the first AI model is less than or equal to a fourth threshold;
(5) second duration is less than or equal to a second time threshold, where the second duration is duration in which the first performance of the first AI model is greater than or equal to a fifth threshold;
(6) second performance of the first AI model is greater than or equal to a sixth threshold, where an AI model with low second performance is better than an AI model with high second performance;
(7) a third statistical count is greater than or equal to a third count threshold, where the third statistical count is a count of times that the second performance of the first AI model is greater than or equal to a seventh threshold in a third preset time period;
(8) a fourth statistical count is less than or equal to a fourth count threshold, where the fourth statistical count is a count of times that the second performance of the first AI model is less than or equal to an eighth threshold in a fourth preset time period;
(9) third duration is greater than or equal to a third time threshold, where the third duration is duration in which the second performance of the first AI model is greater than or equal to a ninth threshold; and
(10) fourth duration is less than or equal to a fourth time threshold, where the fourth duration is duration in which the second performance of the first AI model is less than or equal to a tenth threshold.

Specifically, the first device may determine whether a trigger condition is met before running the plurality of AI models in parallel. The first performance or the second performance may be used to represent performance of the currently used first AI model, where the greater the value of the first performance, the better the performance of the first AI model; or the smaller the value of the second performance, the better the performance of the first AI model. The first performance may be precision, a similarity, accuracy, a hit rate, coverage, efficiency, spectrum efficiency, a throughput, a capacity, or the like. The second performance may be an error, a mean square error, a normalized mean square error, a bit error rate (Bit Error Rate, BER), a block error rate (Block Error Rate, BLER), a call drop rate, a false switching probability, or the like.

The first performance or the second performance may be determined based on an output result of the first AI model. In this case, the output result of the first AI model is a final result. For example, the first AI model is a model for calculating precision, the output result of the first AI model is the final result, and the first performance may be determined based on the output result of the first AI model; or the first performance may be determined based on a result obtained after the output result of the first AI model is input to another functional module, and in this case, the output result of the first AI model is considered as an intermediate result.

After the first device runs the plurality of AI models in parallel based on the trigger condition, the method further includes:
in a case that the trigger condition includes that the target event is detected, the first device sends second information to the second device, where the second information is used to indicate that the first device runs the plurality of AI models in parallel.

In a case that the first device detects the target event and runs the plurality of AI models in parallel, the first device autonomously determines to perform an operation of running the plurality of AI models in parallel, and the first device may notify, by using the second information, the second device of its operation of running the plurality of AI models in parallel.

In an embodiment of this application, the plurality of AI models include at least one of the following:
(1) an AI model running in the first device before running of the plurality of AI models in parallel;
(2) an AI model prestored by the first device;
(3) an AI model received by the first device from the second device; and
(4) a model derived by the first device based on a second AI model, where the second AI model includes an AI model obtained by the first device.

The AI model obtained by the first device may be an AI model running in the first device before running of the plurality of AI models in parallel, or an AI model prestored by the first device, or an AI model received by the first device from the second device. Specifically, the model derived based on the second AI model may be a model obtained by performing an operation such as fine tuning or domain adaptation on the second AI model, for example, a model obtained by performing an operation, such as fine tuning (fine tuning) based on supervised migration learning, domain adaptation (domain adaptation) based on unsupervised migration learning, or neural network based compression, such as pruning (pruning) and knowledge distillation (knowledge distillation). By the running results of the plurality of AI models are evaluated, the target model with the best performance is determined to improve device performance.

In an embodiment of this application, the evaluation includes evaluating an output result of a third AI model, or evaluating a final result obtained based on an output result of a third AI model, where the third AI model is any one of the plurality of AI models running in parallel.

Specifically, the evaluating running results of the plurality of AI models running in parallel includes evaluating the running result of each of the plurality of AI models separately. For ease of description, any one of the plurality of AI models is referred to as a third AI model. The evaluation may be determined based on the running result of the third AI model. For example, the output result of the third AI model is evaluated, and in this case, the output result of the third AI model is the final result. Alternatively, the final result obtained from the output result of the third AI model is evaluated, and in this case, the output result of the third AI model is considered as an intermediate result. The evaluation result obtained through evaluation may be used as a performance indicator of the AI model.

In an embodiment of this application, after the first device evaluates the running results of the plurality of AI models running in parallel, and determines the target model from the plurality of AI models, the method further includes:
in a case that the target model meets a preset condition, the first device performs a model switching operation, where the model switching operation includes stopping using a first AI model, and using the target model, where the first AI model is an AI model currently used by the first device, and the first AI model is a model in the plurality of AI models.

After the target model is determined from the plurality of AI models, whether the target model meets the preset condition may be determined. In the case that the target model meets the preset condition, the first device performs the model switching operation, that is, replaces the first AI model with the target model with better performance.

In an embodiment, the preset condition includes at least one of the following:
a difference between first performance of the target model and first performance of the first AI model is greater than or equal to a first threshold, where an AI model with high first performance is better than an AI model with low first performance, the target model is a model with highest first performance among other models, and the other models are models other than the first AI model in the plurality of AI models;
a first count is greater than or equal to a first count threshold, where the first count is a count of times that the difference between the first performance of the target model and the first performance of the first AI model is greater than or equal to a second threshold in a first preset time period;
a second count is less than or equal to a second count threshold, where the second count is a count of times that the difference between the first performance of the target model and the first performance of the first AI model is less than or equal to a third threshold in a second preset time period;
fifth duration is greater than or equal to a fifth time threshold, where the fifth duration is duration in which the difference between the first performance of the target model and the first performance of the first AI model is greater than or equal to a fourth threshold;
sixth duration is less than or equal to a sixth time threshold, where the sixth duration is duration in which the difference between the first performance of the target model and the first performance of the first AI model is less than or equal to a fifth threshold;
a ratio of the first performance of the target model to the first performance of the first AI model is greater than or equal to a sixth threshold;
a third count is greater than or equal to a third count threshold, where the third count is a count of times that the ratio of the first performance of the target model to the first performance of the first AI model is greater than or equal to a seventh threshold in a third preset time period;
a fourth count is less than or equal to a fourth count threshold, where the fourth count is a count of times that the ratio of the first performance of the target model to the first performance of the first AI model is less than or equal to an eighth threshold in a fourth preset time period;
seventh duration is greater than or equal to a seventh time threshold, where the seventh duration is duration in which the ratio of the first performance of the target model to the first performance of the first AI model is greater than or equal to a ninth threshold; and
eighth duration is less than or equal to an eighth time threshold, where the eighth duration is duration in which the ratio of the first performance of the target model to the first performance of the first AI model is less than or equal to a tenth threshold.

In another embodiment, the preset condition includes one of the following:
a difference between second performance of the target model and second performance of the first AI model is less than or equal to an eleventh threshold, where an AI model with low second performance is better than an AI model with high second performance, the target model is a model with lowest second performance among other models, and the other models are models other than the first AI model in the plurality of AI models;
a fifth count is greater than or equal to a fifth count threshold, where the fifth count is a count of times that the difference between the second performance of the target model and the second performance of the first AI model is less than or equal to a twelfth threshold in a fifth preset time period;
a sixth count is less than or equal to a sixth count threshold, where the sixth count is a count of times that the difference between the second performance of the target model and the second performance of the first AI model is greater than or equal to a thirteenth threshold in a sixth preset time period;
ninth duration is greater than or equal to a ninth time threshold, where the ninth duration is duration in which the difference between the second performance of the target model and the second performance of the first AI model is less than or equal to a fourteenth threshold;
tenth duration is less than or equal to a tenth time threshold, where the tenth duration is duration in which the difference between the second performance of the target model and the second performance of the first AI model is greater than or equal to a fifteenth threshold;
a ratio of the second performance of the target model to the second performance of the first AI model is less than or equal to a sixteenth threshold;
a seventh count is greater than or equal to a seventh count threshold, where the seventh count is a count of times that the ratio of the second performance of the target model to the second performance of the first AI model is less than or equal to a seventeenth threshold in a seventh preset time period;
an eighth count is less than or equal to an eighth count threshold, where the eighth count is a count of times that the ratio of the second performance of the target model to the second performance of the first AI model is less than or equal to an eighteenth threshold in an eighth preset time period;
eleventh duration is greater than or equal to an eleventh time threshold, where the eleventh duration is duration in which the ratio of the second performance of the target model to the second performance of the first AI model is less than or equal to a nineteenth threshold; and
twelfth duration is less than or equal to a twelfth time threshold, where the twelfth duration is duration in which the ratio of the second performance of the target model to the second performance of the first AI model is greater than or equal to a twentieth threshold.

After the first device performs the model switching operation in the case that the target model meets the preset condition, the method further includes:
the first device sends model switching information to the second device, where the model switching information includes at least one of a switch flag, an identifier of the first AI model, and an identifier of the target model.

After the first device performs the model switching operation, the first device may notify, by using the model switching information, the second device that the first device has performed model switching. Specifically, the switch flag may be used to indicate that the AI model currently used by the first device has been switched. The identifier of the first AI model may be used to indicate a model used by the first device before model switching, that is, the model used by the first device has been switched from the first AI model to other models. The identifier of the target model may be used to indicate the model used by the first device after device switching, that is, the model used by the first device has been switched from the previously used model to the target model.

In an embodiment of this application, in a case that the first device is a terminal and that the second device is a network-side device, first target information sent by the first device to the second device is carried in one of the following signaling or information:
layer 1 signaling of a physical uplink control channel (Physical Uplink Control Channel, PUCCH);
MSG 1 of a physical random access channel (Physical Random Access Channel, PRACH);
MSG 3 of the PRACH;
MSG A of the PRACH; and
information of a physical uplink shared channel (Physical Uplink Shared Channel, PUSCH), where
the first target information includes the second information or the model switching information.

In an embodiment of this application, in a case that the first device is a first terminal and that the second device is a second terminal, first target information sent by the first device to the second device is carried in one of the following signaling or information:
Xn interface signaling;
PC5 interface signaling;
information of a physical sidelink control channel (Physical SideLink Control Channel, PSCCH);
information of a physical sidelink shared channel (Physical SideLink Shared Channel, PSSCH);
information of a physical sidelink broadcast channel (Physical SideLink Broadcast Channel, PSBCH);
information of a physical sidelink discovery channel (Physical Sidelink Discovery Channel, PSDCH); and
information of a physical sidelink feedback channel (Physical SideLink Feedback Channel, PSFCH), where
the first target information includes the second information or the model switching information.

In an embodiment of this application, in a case that the first device is a terminal and that the second device is a network-side device, second target information is sent by the second device to the first device, and the second target information is carried in one of the following signaling or information:
a medium access control control element (Medium Access Control Control Element, MAC CE);
a radio resource control (Radio Resource Control, RRC) message;
a non-access stratum (Non-Access-Stratum, NAS) message;
a management and orchestration message;
user plane data;
downlink control information (Downlink Control Information, DCI) information;
a system information block (System Information Block, SIB);
layer 1 signaling of a physical downlink control channel (Physical Downlink Control Channel, PDCCH);
information of a physical downlink shared channel (Physical Downlink Shared Channel, PDSCH);
MSG 2 of a PRACH;
MSG 4 of the PRACH; and
MSG B of the PRACH, where
the second target information includes the trigger condition or the preset condition.

In an embodiment of this application, in a case that the first device is a first terminal and that the second device is a second terminal, second target information is sent by the second device to the first device, and the second target information is carried in one of the following signaling or information:
Xn interface signaling;
PC5 interface signaling;
information of a PSCCH;
information of a PSSCH;
information of a PSBCH;
information of a PSDCH; and
information of a PSFCH, where
the second target information includes the trigger condition or the preset condition.

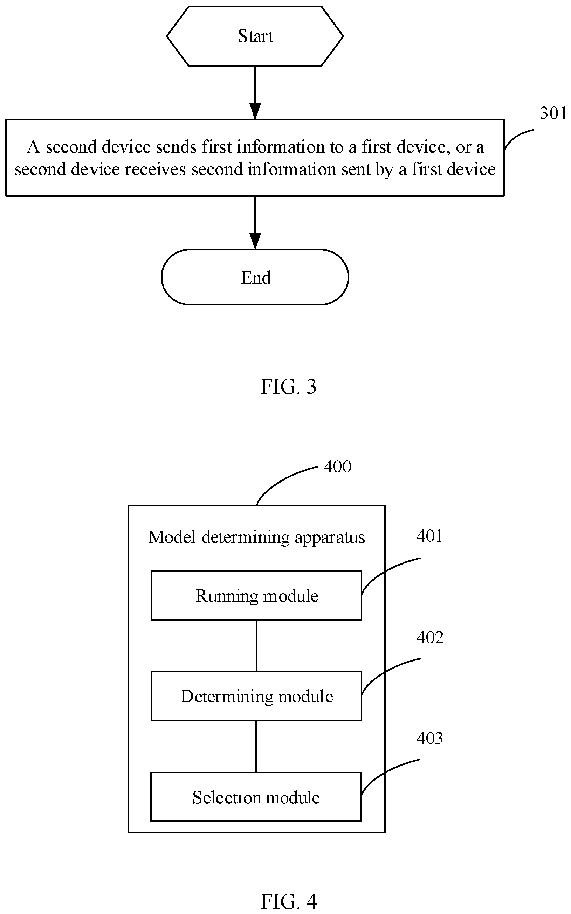

As shown in FIG. 3, an embodiment of this application provides an information transmission method. The method includes the following step.

Step 301: A second device sends first information to a first device, where the first information is used to instruct the first device to run a plurality of AI models in parallel, and functions implemented by models in the plurality of AI models are the same; or
a second device receives second information sent by a first device, where the second information is used to indicate that the first device runs the plurality of AI models in parallel.

Specifically, the first device may be a first terminal, and parallel running of the plurality of artificial intelligence AI models may be triggered by the first device autonomously. If parallel running is triggered by the first device autonomously, the first device sends the second information to the second device to notify the second device that the first device runs the plurality of artificial intelligence AI models in parallel. Parallel running of the plurality of artificial intelligence AI models may also be performed based on an instruction of the second device. For example, the second device sends, to the first device, the first information used to instruct the first device to run the plurality of AI models in parallel, and the first device runs the plurality of AI models in parallel based on the first information.

Optionally, the plurality of AI models running in parallel include a same input. Specifically, the plurality of AI models run by using the same input to obtain running results of the plurality of AI models, so as to determine a target model from the plurality of AI models by evaluating the running results of the plurality of AI models.

In this embodiment, the second device may send the first information to the first device, where the first information is used to instruct the first device to run the plurality of AI models in parallel, so that the first device runs the plurality of AI models in parallel and further determines the target model from the plurality of AI models. In this way, a waste of transmission resources and computing resources of the first device caused by an inappropriate model can be avoided, and device performance can be improved. In addition, the first device may also autonomously determine to run the plurality of AI models in parallel, and notify the second device of the operation of running the plurality of AI models in parallel.

In an embodiment of this application, the plurality of AI models include at least one of the following:
an AI model running in the first device before running of the plurality of AI models in parallel;
an AI model prestored by the first device;
an AI model received by the first device from the second device; and
a model derived by the first device based on a second AI model, where the second AI model includes an AI model obtained by the first device.

In an embodiment of this application, the method further includes: the second device receives model switching information sent by the first device, where the model switching information includes at least one of a switch flag, an identifier of a first AI model, and an identifier of a target model, the first AI model is an AI model currently used by the first device, and the first AI model and the target model are both models in the plurality of AI models.

In an embodiment of this application, in a case that the first device is a terminal and that the second device is a network-side device, the second information or the model switching information is carried in one of the following signaling or information:
layer 1 signaling of a physical uplink control channel PUCCH;
MSG 1 of a physical random access channel PRACH;
MSG 3 of the PRACH;
MSG A of the PRACH; and
information of a physical uplink shared channel PUSCH.

In an embodiment of this application, in a case that the first device is a first terminal and that the second device is a second terminal, the second information or the model switching information is carried in one of the following signaling or information:
Xn interface signaling;
PC5 interface signaling;
information of a physical sidelink control channel PSCCH;
information of a physical sidelink shared channel PSSCH;
information of a physical sidelink broadcast channel PSBCH;
information of a physical sidelink discovery channel PSDCH; and
information of a physical sidelink feedback channel PSFCH.

In an embodiment of this application, in a case that the first device is a terminal and that the second device is a network-side device, the first information is carried in one of the following signaling or information:
a medium access control control element MAC CE;
a radio resource control RRC message;
a non-access stratum NAS message;
a management and orchestration message;
user plane data;
downlink control information DCI information;
a system information block SIB;
layer 1 signaling of a physical downlink control channel PDCCH;
information of a physical downlink shared channel PDSCH;
MSG 2 of a PRACH;
MSG 4 of the PRACH; and
MSG B of the PRACH.

In an embodiment of this application, in a case that the first device is a first terminal and that the second device is a second terminal, the first information is carried in one of the following signaling or information:
Xn interface signaling;
PC5 interface signaling;
information of a PSCCH;
information of a PSSCH;
information of a PSBCH;
information of a PSDCH; and
information of a PSFCH.

In an embodiment of this application, the plurality of AI models running in parallel include a same input.

An application scenario of this embodiment of this application is hereinafter described by using examples.

Scenario 1: The second device sends a plurality of AI models that implement a same function to the first device, and the first device autonomously determines and selects one of the plurality of AI models for deployment.

Scenario 2: The first device is running an AI model, and the second device delivers one or more AI models that implement a same function to the first device. The first device needs to determine whether to deploy the AI model sent by the second device and which AI model is to be deployed.

Scenario 3: The first device is running an AI model, and other AI models that implement a same function are stored in the first device. The first device may switch among these AI models based on a change of an environment, and select an AI model most suitable for the current environment for deployment.

Scenario 4: The first device is running an AI model, and the first device finely tunes the currently running AI model in parallel to obtain an AI model with an updated parameter. The first device determines, based on performance of the running AI model and the AI model with the updated parameter, whether it is necessary to replace the running AI model with the AI model with the updated parameter.

In the foregoing scenario, according to the method provided in this embodiment of this application, by selecting and running an AI model with best performance, a waste of transmission resources and computing resources caused by an inappropriate model selection can be avoided, and device performance can be improved.

As shown in FIG. 4, an embodiment of this application provides a model determining apparatus. The model determining apparatus 400 includes:
a running module 401, configured to run a plurality of artificial intelligence AI models in parallel, where functions implemented by models in the plurality of AI models are the same;
a determining module 402, configured to evaluate running results of the plurality of AI models running in parallel, to obtain an evaluation result; and
a selection module 403, configured to determine a target model from the plurality of AI models based on the evaluation result.

Optionally, the running module 401 is configured to run the plurality of AI models in parallel based on a trigger condition, where the trigger condition includes at least one of the following:
at intervals of a preset time period;
first information sent by a second device is received, where the first information is used to instruct to run the plurality of AI models in parallel; and
a target event is detected.

Optionally, the target event includes one of the following:
first performance of a first AI model currently used by the first device is less than or equal to a first threshold, where the first AI model is a model in the plurality of AI models, and an AI model with high first performance is better than an AI model with low first performance;
a first statistical count is greater than or equal to a first count threshold, where the first statistical count is a count of times that the first performance of the first AI model is less than or equal to a second threshold in a first preset time period;
a second statistical count is less than or equal to a second count threshold, where the second statistical count is a count of times that the first performance of the first AI model is greater than or equal to a third threshold in a second preset time period;
first duration is greater than or equal to a first time threshold, where the first duration is duration in which the first performance of the first AI model is less than or equal to a fourth threshold;
second duration is less than or equal to a second time threshold, where the second duration is duration in which the first performance of the first AI model is greater than or equal to a fifth threshold;
second performance of the first AI model is greater than or equal to a sixth threshold, where an AI model with low second performance is better than an AI model with high second performance;
a third statistical count is greater than or equal to a third count threshold, where the third statistical count is a count of times that the second performance of the first AI model is greater than or equal to a seventh threshold in a third preset time period;
a fourth statistical count is less than or equal to a fourth count threshold, where the fourth statistical count is a count of times that the second performance of the first AI model is less than or equal to an eighth threshold in a fourth preset time period;
third duration is greater than or equal to a third time threshold, where the third duration is duration in which the second performance of the first AI model is greater than or equal to a ninth threshold; and
fourth duration is less than or equal to a fourth time threshold, where the fourth duration is duration in which the second performance of the first AI model is less than or equal to a tenth threshold.

Optionally, the apparatus 400 further includes a second sending module, configured to: in a case that the trigger condition includes that the target event is detected, send second information to the second device, where the second information is used to indicate that the first device runs the plurality of AI models in parallel.

Optionally, the plurality of AI models include at least one of the following:
an AI model running in the first device before running of the plurality of AI models in parallel;
an AI model prestored by the first device;
an AI model received by the first device from a second device; and
a model derived by the first device based on a second AI model, where the second AI model includes an AI model obtained by the first device.

Optionally, the evaluation includes evaluating an output result of a third AI model, or evaluating a final result obtained based on an output result of a third AI model, where the third AI model is any one of the plurality of AI models running in parallel.

Optionally, the apparatus 400 further includes an execution module, configured to: in a case that the target model meets a preset condition, perform a model switching operation, where the model switching operation includes stopping using a first AI model, and using the target model, where the first AI model is an AI model currently used by the first device, and the first AI model is a model in the plurality of AI models.

Optionally, the preset condition includes at least one of the following:
a difference between first performance of the target model and first performance of the first AI model is greater than or equal to a first threshold, where an AI model with high first performance is better than an AI model with low first performance, the target model is a model with highest first performance among other models, and the other models are models other than the first AI model in the plurality of AI models;
a first count is greater than or equal to a first count threshold, where the first count is a count of times that the difference between the first performance of the target model and the first performance of the first AI model is greater than or equal to a second threshold in a first preset time period;
a second count is less than or equal to a second count threshold, where the second count is a count of times that the difference between the first performance of the target model and the first performance of the first AI model is less than or equal to a third threshold in a second preset time period;
fifth duration is greater than or equal to a fifth time threshold, where the fifth duration is duration in which the difference between the first performance of the target model and the first performance of the first AI model is greater than or equal to a fourth threshold;
sixth duration is less than or equal to a sixth time threshold, where the sixth duration is duration in which the difference between the first performance of the target model and the first performance of the first AI model is less than or equal to a fifth threshold;
a ratio of the first performance of the target model to the first performance of the first AI model is greater than or equal to a sixth threshold;
a third count is greater than or equal to a third count threshold, where the third count is a count of times that the ratio of the first performance of the target model to the first performance of the first AI model is greater than or equal to a seventh threshold in a third preset time period;
a fourth count is less than or equal to a fourth count threshold, where the fourth count is a count of times that the ratio of the first performance of the target model to the first performance of the first AI model is less than or equal to an eighth threshold in a fourth preset time period;
seventh duration is greater than or equal to a seventh time threshold, where the seventh duration is duration in which the ratio of the first performance of the target model to the first performance of the first AI model is greater than or equal to a ninth threshold; and
eighth duration is less than or equal to an eighth time threshold, where the eighth duration is duration in which the ratio of the first performance of the target model to the first performance of the first AI model is less than or equal to a tenth threshold.

Optionally, the preset condition includes one of the following:
a difference between second performance of the target model and second performance of the first AI model is less than or equal to an eleventh threshold, where an AI model with low second performance is better than an AI model with high second performance, the target model is a model with lowest second performance among other models, and the other models are models other than the first AI model in the plurality of AI models;
a fifth count is greater than or equal to a fifth count threshold, where the fifth count is a count of times that the difference between the second performance of the target model and the second performance of the first AI model is less than or equal to a twelfth threshold in a fifth preset time period;
a sixth count is less than or equal to a sixth count threshold, where the sixth count is a count of times that the difference between the second performance of the target model and the second performance of the first AI model is greater than or equal to a thirteenth threshold in a sixth preset time period;
ninth duration is greater than or equal to a ninth time threshold, where the ninth duration is duration in which the difference between the second performance of the target model and the second performance of the first AI model is less than or equal to a fourteenth threshold;
tenth duration is less than or equal to a tenth time threshold, where the tenth duration is duration in which the difference between the second performance of the target model and the second performance of the first AI model is greater than or equal to a fifteenth threshold;
a ratio of the second performance of the target model to the second performance of the first AI model is less than or equal to a sixteenth threshold;
a seventh count is greater than or equal to a seventh count threshold, where the seventh count is a count of times that the ratio of the second performance of the target model to the second performance of the first AI model is less than or equal to a seventeenth threshold in a seventh preset time period;
an eighth count is less than or equal to an eighth count threshold, where the eighth count is a count of times that the ratio of the second performance of the target model to the second performance of the first AI model is less than or equal to an eighteenth threshold in an eighth preset time period;
eleventh duration is greater than or equal to an eleventh time threshold, where the eleventh duration is duration in which the ratio of the second performance of the target model to the second performance of the first AI model is less than or equal to a nineteenth threshold; and
twelfth duration is less than or equal to a twelfth time threshold, where the twelfth duration is duration in which the ratio of the second performance of the target model to the second performance of the first AI model is greater than or equal to a twentieth threshold.

Optionally, the apparatus 400 further includes a third sending module, configured to send model switching information to a second device, where the model switching information includes at least one of a switch flag, an identifier of the first AI model, and an identifier of the target model.

Optionally, in a case that the first device is a terminal and that the second device is a network-side device, first target information sent by the first device to the second device is carried in one of the following signaling or information:
layer 1 signaling of a physical uplink control channel PUCCH;
MSG 1 of a physical random access channel PRACH;
MSG 3 of the PRACH;
MSG A of the PRACH; and
information of a physical uplink shared channel PUSCH, where
the first target information includes the second information or the model switching information.

Optionally, in a case that the first device is a first terminal and that the second device is a second terminal, first target information sent by the first device to the second device is carried in one of the following signaling or information:
Xn interface signaling;
PC5 interface signaling;
information of a physical sidelink control channel PSCCH;
information of a physical sidelink shared channel PSSCH;
information of a physical sidelink broadcast channel PSBCH;
information of a physical sidelink discovery channel PSDCH; and
information of a physical sidelink feedback channel PSFCH, where
the first target information includes the second information or the model switching information.

Optionally, in a case that the first device is a terminal and that the second device is a network-side device, second target information is sent by the second device to the first device, and the second target information is carried in one of the following signaling or information:
a medium access control control element MAC CE;
a radio resource control RRC message;
a non-access stratum NAS message;
a management and orchestration message;
user plane data;
downlink control information DCI information;
a system information block SIB;
layer 1 signaling of a physical downlink control channel PDCCH;
information of a physical downlink shared channel PDSCH;
MSG 2 of a PRACH;
MSG 4 of the PRACH; and
MSG B of the PRACH, where
the second target information includes the trigger condition or the preset condition.

Optionally, in a case that the first device is a first terminal and that the second device is a second terminal, second target information is sent by the second device to the first device, and the second target information is carried in one of the following signaling or information:
Xn interface signaling;
PC5 interface signaling;
information of a PSCCH;
information of a PSSCH;
information of a PSBCH;
information of a PSDCH; and
information of a PSFCH, where
the second target information includes the trigger condition or the preset condition.

Optionally, the plurality of AI models running in parallel include a same input.

The model determining apparatus 400 provided in this embodiment of this application can implement each process implemented by the method embodiment in FIG. 2, with the same technical effect achieved. To avoid repetition, details are not described herein again.

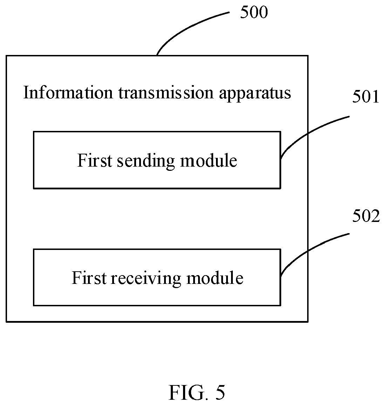

As shown in FIG. 5, an embodiment of this application provides an information transmission apparatus. The information transmission apparatus 500 includes:
a first sending module 501, configured to send first information to a first device, where the first information is used to instruct the first device to run a plurality of AI models in parallel, and functions implemented by models in the plurality of AI models are the same; or
a first receiving module 502, configured to receive second information sent by a first device, where the second information is used to indicate that the first device runs the plurality of AI models in parallel.

Optionally, the plurality of AI models include at least one of the following:
an AI model running in the first device before running of the plurality of AI models in parallel;
an AI model prestored by the first device;
an AI model received by the first device from a second device; and
a model derived by the first device based on a second AI model, where the second AI model includes an AI model obtained by the first device.

Optionally, the apparatus 500 further includes a second receiving module, configured to receive model switching information sent by the first device, where the model switching information includes at least one of a switch flag, an identifier of a first AI model, and an identifier of a target model, and the first AI model is an AI model currently used by the first device. The first AI model and the target model are both models in the plurality of AI models.

Optionally, in a case that the first device is a terminal and that the second device is a network-side device, the second information or the model switching information is carried in one of the following signaling or information:
layer 1 signaling of a physical uplink control channel PUCCH;
MSG 1 of a physical random access channel PRACH;
MSG 3 of the PRACH;
MSG A of the PRACH; and
information of a physical uplink shared channel PUSCH.

Optionally, in a case that the first device is a first terminal and that the second device is a second terminal, the second information or the model switching information is carried in one of the following signaling or information:
Xn interface signaling;
PC5 interface signaling;
information of a physical sidelink control channel PSCCH;
information of a physical sidelink shared channel PSSCH;
information of a physical sidelink broadcast channel PSBCH;
information of a physical sidelink discovery channel PSDCH; and
information of a physical sidelink feedback channel PSFCH.

Optionally, in a case that the first device is a terminal and that the second device is a network-side device, the first information is carried in one of the following signaling or information:
a medium access control control element MAC CE;
a radio resource control RRC message;
a non-access stratum NAS message;
a management and orchestration message;
user plane data;
downlink control information DCI information;
a system information block SIB;
layer 1 signaling of a physical downlink control channel PDCCH;
information of a physical downlink shared channel PDSCH;
MSG 2 of a PRACH;
MSG 4 of the PRACH; and
MSG B of the PRACH.

Optionally, in a case that the first device is a first terminal and that the second device is a second terminal, the first information is carried in one of the following signaling or information:
Xn interface signaling;
PC5 interface signaling;
information of a PSCCH;
information of a PSSCH;
information of a PSBCH;
information of a PSDCH; and
information of a PSFCH.

Optionally, the plurality of AI models running in parallel include a same input.

The information transmission apparatus 500 provided in this embodiment of this application can implement each process implemented by the method embodiment in FIG. 3, with the same technical effect achieved. To avoid repetition, details are not described herein again.

The apparatus in this embodiment of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the foregoing illustrated type of the terminal 11. The other devices may be a server, a network attached storage (Network Attached Storage, NAS), and the like. This is not specifically limited in this embodiment of this application.

An embodiment of this application further provides a first device, including a processor and a communication interface. The processor is configured to: run a plurality of artificial intelligence AI models in parallel, where functions implemented by models in the plurality of AI models are the same;
evaluate running results of the plurality of AI models running in parallel; and determine a target model from the plurality of AI models.

The embodiment of the first device corresponds to the foregoing method embodiment shown in FIG. 2, and each implementation process and implementation of the foregoing method embodiment can be applied to the embodiment of the first device, with the same technical effect achieved.

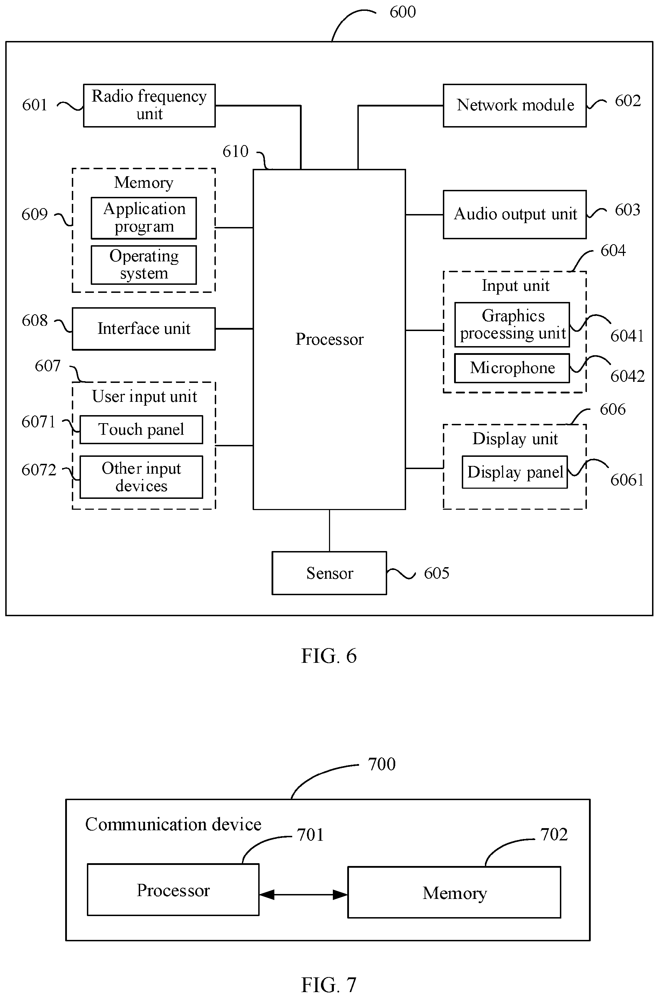

FIG. 6 is a schematic diagram of a hardware structure of a terminal for implementing an embodiment of this application. The terminal may be a first device.

The terminal 600 includes but is not limited to components such as a radio frequency unit 601, a network module 602, an audio output unit 603, an input unit 604, a sensor 605, a display unit 606, a user input unit 607, an interface unit 608, a memory 609, and a processor 610.

A person skilled in the art may understand that the terminal 600 may further include a power supply (for example, a battery) supplying power to all components. The power supply may be logically connected to the processor 610 through a power management system. In this way, functions such as charge management, discharge management, and power consumption management are implemented by using the power management system. The terminal structure shown in FIG. 6 does not constitute a limitation on the terminal. The terminal may include more or fewer components than those shown in the figure, or some components are combined, or component arrangements are different. Details are not described herein again.

It should be understood that, in this embodiment of this application, the input unit 604 may include a graphics processing unit (Graphics Processing Unit, GPU) 6041 and a microphone 6042. The graphics processing unit 6041 processes image data of a still picture or video obtained by an image capture apparatus (such as a camera) in a video capture mode or an image capture mode. The display unit 606 may include a display panel 6061, and the display panel 6061 may be configured in a form of a liquid crystal display, an organic light-emitting diode, or the like. The user input unit 607 includes a touch panel 6071 and other input devices 6072. The touch panel 6071 is also referred to as a touchscreen. The touch panel 6071 may include two parts: a touch detection apparatus and a touch controller. The other input devices 6072 may include but are not limited to a physical keyboard, a function button (such as a volume control button or a power button), a trackball, a mouse, and a joystick. Details are not described herein again.

In this embodiment of this application, after receiving downlink data from a network-side device, the radio frequency unit 601 sends the downlink data to the processor 610 for processing, and in addition, sends uplink data to a base station. Generally, the radio frequency unit 601 includes but is not limited to an antenna, at least one amplifier, a transceiver, a coupler, a low noise amplifier, a duplexer, and the like.

The memory 609 may be configured to store software programs or instructions and various data. The memory 609 may primarily include a program or instruction storage area and a data storage area. The program or instruction storage area may store an operating system, an application program or instructions (such as an audio play function and an image play function) required by at least one function, and the like. In addition, the memory 609 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 610 may include one or more processing units. Optionally, the processor 610 may integrate an application processor and a modem processor. The application processor mainly processes the operating system, a user interface, an application program, or an instruction. The modem processor mainly processes wireless communication. For example, the modem processor is a baseband processor. It may be understood that the modem processor may alternatively not be integrated in the processor 610.

The processor 610 is configured to: run a plurality of artificial intelligence AI models in parallel, where functions implemented by models in the plurality of AI models are the same; evaluate running results of the plurality of AI models running in parallel, to obtain an evaluation result; and determine a target model from the plurality of AI models based on the evaluation result.

Optionally, the processor 610 is further configured to run the plurality of AI models in parallel based on a trigger condition, where the trigger condition includes at least one of the following:
at intervals of a preset time period;
first information sent by a second device is received, where the first information is used to instruct the first device to run the plurality of AI models in parallel; and
a target event is detected.

Optionally, the target event includes one of the following:
first performance of a first AI model currently used by the first device is less than or equal to a first threshold, where the first AI model is a model in the plurality of AI models, and an AI model with high first performance is better than an AI model with low first performance;
a first statistical count is greater than or equal to a first count threshold, where the first statistical count is a count of times that the first performance of the first AI model is less than or equal to a second threshold in a first preset time period;
a second statistical count is less than or equal to a second count threshold, where the second statistical count is a count of times that the first performance of the first AI model is greater than or equal to a third threshold in a second preset time period;
first duration is greater than or equal to a first time threshold, where the first duration is duration in which the first performance of the first AI model is less than or equal to a fourth threshold;
second duration is less than or equal to a second time threshold, where the second duration is duration in which the first performance of the first AI model is greater than or equal to a fifth threshold;
second performance of the first AI model is greater than or equal to a sixth threshold, where an AI model with low second performance is better than an AI model with high second performance;
a third statistical count is greater than or equal to a third count threshold, where the third statistical count is a count of times that the second performance of the first AI model is greater than or equal to a seventh threshold in a third preset time period;
a fourth statistical count is less than or equal to a fourth count threshold, where the fourth statistical count is a count of times that the second performance of the first AI model is less than or equal to an eighth threshold in a fourth preset time period;
third duration is greater than or equal to a third time threshold, where the third duration is duration in which the second performance of the first AI model is greater than or equal to a ninth threshold; and
fourth duration is less than or equal to a fourth time threshold, where the fourth duration is duration in which the second performance of the first AI model is less than or equal to a tenth threshold.

Optionally, the radio frequency unit 601 is further configured to: in a case that the trigger condition includes that the target event is detected, send second information to the second device, where the second information is used to indicate that the first device runs the plurality of AI models in parallel.

Optionally, the plurality of AI models include at least one of the following:
an AI model running in the first device before running of the plurality of AI models in parallel;
an AI model prestored by the first device;
an AI model received by the first device from a second device; and
a model derived by the first device based on a second AI model, where the second AI model includes an AI model obtained by the first device.

Optionally, the evaluation includes evaluating an output result of a third AI model, or evaluating a final result obtained based on an output result of a third AI model, where the third AI model is any one of the plurality of AI models running in parallel.

Optionally, the processor 610 is further configured to: in a case that the target model meets a preset condition, perform a model switching operation, where the model switching operation includes stopping using a first AI model, and using the target model, where the first AI model is an AI model currently used by the first device, and the first AI model is a model in the plurality of AI models.

Optionally, the preset condition includes at least one of the following:
a difference between first performance of the target model and first performance of the first AI model is greater than or equal to a first threshold, where an AI model with high first performance is better than an AI model with low first performance, the target model is a model with highest first performance among other models, and the other models are models other than the first AI model in the plurality of AI models;
a first count is greater than or equal to a first count threshold, where the first count is a count of times that the difference between the first performance of the target model and the first performance of the first AI model is greater than or equal to a second threshold in a first preset time period;
a second count is less than or equal to a second count threshold, where the second count is a count of times that the difference between the first performance of the target model and the first performance of the first AI model is less than or equal to a third threshold in a second preset time period;
fifth duration is greater than or equal to a fifth time threshold, where the fifth duration is duration in which the difference between the first performance of the target model and the first performance of the first AI model is greater than or equal to a fourth threshold;
sixth duration is less than or equal to a sixth time threshold, where the sixth duration is duration in which the difference between the first performance of the target model and the first performance of the first AI model is less than or equal to a fifth threshold;
a ratio of the first performance of the target model to the first performance of the first AI model is greater than or equal to a sixth threshold;
a third count is greater than or equal to a third count threshold, where the third count is a count of times that the ratio of the first performance of the target model to the first performance of the first AI model is greater than or equal to a seventh threshold in a third preset time period;
a fourth count is less than or equal to a fourth count threshold, where the fourth count is a count of times that the ratio of the first performance of the target model to the first performance of the first AI model is less than or equal to an eighth threshold in a fourth preset time period;
seventh duration is greater than or equal to a seventh time threshold, where the seventh duration is duration in which the ratio of the first performance of the target model to the first performance of the first AI model is greater than or equal to a ninth threshold; and
eighth duration is less than or equal to an eighth time threshold, where the eighth duration is duration in which the ratio of the first performance of the target model to the first performance of the first AI model is less than or equal to a tenth threshold.

Optionally, the preset condition includes one of the following:
a difference between second performance of the target model and second performance of the first AI model is less than or equal to an eleventh threshold, where an AI model with low second performance is better than an AI model with high second performance, the target model is a model with lowest second performance among other models, and the other models are models other than the first AI model in the plurality of AI models;
a fifth count is greater than or equal to a fifth count threshold, where the fifth count is a count of times that the difference between the second performance of the target model and the second performance of the first AI model is less than or equal to a twelfth threshold in a fifth preset time period;
a sixth count is less than or equal to a sixth count threshold, where the sixth count is a count of times that the difference between the second performance of the target model and the second performance of the first AI model is greater than or equal to a thirteenth threshold in a sixth preset time period;
ninth duration is greater than or equal to a ninth time threshold, where the ninth duration is duration in which the difference between the second performance of the target model and the second performance of the first AI model is less than or equal to a fourteenth threshold;
tenth duration is less than or equal to a tenth time threshold, where the tenth duration is duration in which the difference between the second performance of the target model and the second performance of the first AI model is greater than or equal to a fifteenth threshold;
a ratio of the second performance of the target model to the second performance of the first AI model is less than or equal to a sixteenth threshold;
a seventh count is greater than or equal to a seventh count threshold, where the seventh count is a count of times that the ratio of the second performance of the target model to the second performance of the first AI model is less than or equal to a seventeenth threshold in a seventh preset time period;
an eighth count is less than or equal to an eighth count threshold, where the eighth count is a count of times that the ratio of the second performance of the target model to the second performance of the first AI model is less than or equal to an eighteenth threshold in an eighth preset time period;
eleventh duration is greater than or equal to an eleventh time threshold, where the eleventh duration is duration in which the ratio of the second performance of the target model to the second performance of the first AI model is less than or equal to a nineteenth threshold; and
twelfth duration is less than or equal to a twelfth time threshold, where the twelfth duration is duration in which the ratio of the second performance of the target model to the second performance of the first AI model is greater than or equal to a twentieth threshold.

Optionally, the radio frequency unit 601 is further configured to send model switching information to a second device, where the model switching information includes at least one of a switch flag, an identifier of the first AI model, and an identifier of the target model.

Optionally, in a case that the first device is a terminal and that the second device is a network-side device, first target information sent by the first device to the second device is carried in one of the following signaling or information:
layer 1 signaling of a physical uplink control channel PUCCH;
MSG 1 of a physical random access channel PRACH;
MSG 3 of the PRACH;
MSG A of the PRACH; and
information of a physical uplink shared channel PUSCH, where
the first target information includes the second information or the model switching information.

Optionally, in a case that the first device is a first terminal and that the second device is a second terminal, first target information sent by the first device to the second device is carried in one of the following signaling or information:
Xn interface signaling;
PC5 interface signaling;
information of a physical sidelink control channel PSCCH;
information of a physical sidelink shared channel PSSCH;
information of a physical sidelink broadcast channel PSBCH;
information of a physical sidelink discovery channel PSDCH; and
information of a physical sidelink feedback channel PSFCH, where
the first target information includes the second information or the model switching information.

Optionally, in a case that the first device is a terminal and that the second device is a network-side device, second target information is sent by the second device to the first device, and the second target information is carried in one of the following signaling or information:
a medium access control control element MAC CE;
a radio resource control RRC message;
a non-access stratum NAS message;
a management and orchestration message;
user plane data;
downlink control information DCI information;
a system information block SIB;
layer 1 signaling of a physical downlink control channel PDCCH;
information of a physical downlink shared channel PDSCH;
MSG 2 of a PRACH;
MSG 4 of the PRACH; and
MSG B of the PRACH, where
the second target information includes the trigger condition or the preset condition.

Optionally, in a case that the first device is a first terminal and that the second device is a second terminal, second target information is sent by the second device to the first device, and the second target information is carried in one of the following signaling or information:
Xn interface signaling;
PC5 interface signaling;
information of a PSCCH;
information of a PSSCH;
information of a PSBCH;
information of a PSDCH; and
information of a PSFCH, where
the second target information includes the trigger condition or the preset condition.

Optionally, the plurality of AI models running in parallel include a same input.

The terminal 600 provided in the foregoing embodiment can implement each process implemented in the method embodiment in FIG. 2, with the same technical effect achieved. To avoid repetition, details are not described herein again.

Optionally, as shown in FIG. 7, an embodiment of this application further provides a communication device 700, including a processor 701 and a memory 702. The memory 702 stores a program or instructions capable of running on the processor 701. When the program or instructions are executed by the processor 701, the steps of the foregoing method embodiment in FIG. 2 or FIG. 3 are implemented, with the same technical effect achieved. To avoid repetition, details are not described herein again.

An embodiment of this application further provides a second device, including a processor and a communication interface. The communication interface is configured to: send first information to a first device, where the first information is used to instruct the first device to run a plurality of AI models in parallel, and functions implemented by models in the plurality of AI models are the same; or
receive second information sent by a first device, where the second information is used to indicate that the first device runs the plurality of AI models in parallel.

The embodiment of the second device corresponds to the foregoing method embodiment shown in FIG. 3, and each implementation process and implementation of the foregoing method embodiment can be applied to the embodiment of the second device, with the same technical effect achieved.

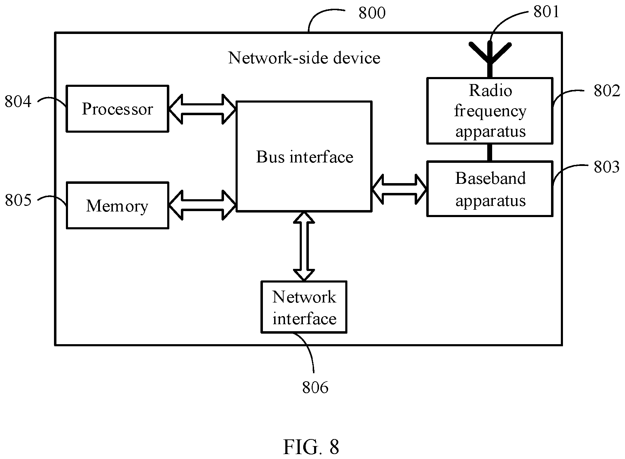

Specifically, an embodiment of this application further provides a network-side device. As shown in FIG. 8, the network-side device 800 includes an antenna 801, a radio frequency apparatus 802, a baseband apparatus 803, a processor 804, and a memory 805. The antenna 801 is connected to the radio frequency apparatus 802. In an uplink direction, the radio frequency apparatus 802 receives information by using the antenna 801, and sends the received information to the baseband apparatus 803 for processing. In a downlink direction, the baseband apparatus 803 processes to-be-sent information, and sends the information to the radio frequency apparatus 802; and the radio frequency apparatus 802 processes the received information and then sends the information out by using the antenna 801.

The method performed by the network-side device in the foregoing embodiment may be implemented in the baseband apparatus 803. The baseband apparatus 803 includes a baseband processor.

The baseband apparatus 803 may include, for example, at least one baseband unit, where a plurality of chips are disposed on the baseband unit. As shown in FIG. 8, one of the chips is, for example, the baseband processor, connected to the memory 805 by using a bus interface, to invoke a program in the memory 805 to perform the operation of the network-side device shown in the foregoing method embodiment.

The network-side device may further include a network interface 806, where the interface is, for example, a common public radio interface (common public radio interface, CPRI).

Specifically, the network-side device 800 in this embodiment of the present invention further includes a program or instructions stored in the memory 805 and capable of running on the processor 804. When the processor 804 invokes the program or instructions in the memory 805, the method performed by each module shown in FIG. 5 is performed, with the same technical effect achieved. To avoid repetition, details are not described herein again.

An embodiment of this application further provides a readable storage medium. The readable storage medium stores a program or instructions. When the program or instructions are executed by a processor, each process of the foregoing method embodiment shown in FIG. 2 or FIG. 3 is implemented, with the same technical effect achieved. To avoid repetition, details are not described herein again.

The processor is a processor in the terminal in the foregoing embodiment. The readable storage medium includes a computer-readable storage medium, for example, a computer read-only memory ROM, a random access memory (Random Access Memory, RAM), a magnetic disk, or an optical disc.

In addition, an embodiment of this application provides a chip. The chip includes a processor and a communication interface. The communication interface is coupled to the processor. The processor is configured to run a program or instructions to implement each process of the foregoing method embodiment shown in FIG. 2 or FIG. 3, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program or program product. The computer program or program product is stored in a storage medium. The computer program or program product is executed by at least one processor to implement each process of the foregoing method embodiment in FIG. 2 or FIG. 3, with the same technical effect achieved. To avoid repetition, details are not described herein again.

An embodiment of this application further provides a communication system, including a first device and a second device. The first device may be configured to perform the steps of the foregoing method embodiment shown in FIG. 2. The second device may be configured to perform the steps of the foregoing method embodiment shown in FIG. 3.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraints of the technical solution. A person skilled in the art may use different methods to implement the described functions for each particular application, but it should not be considered that the implementation goes beyond the scope of the present disclosure.

A person skilled in the art may clearly understand that, for the purpose of convenient and brief description, for a detailed working process of the foregoing system, apparatus, and unit, refer to a corresponding process in the foregoing method embodiments, and details are not described herein again.

In the embodiments provided in this application, it should be understood that the disclosed apparatus and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected depending on actual requirements, to achieve the objectives of the solutions in the embodiments.

In addition, functional units in the embodiments of the present disclosure may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of the present disclosure substantially or parts contributing to the related art or parts of the technical solutions may be embodied in a form of a software product, and the computer software product is stored in a storage medium, including several instructions for enabling a computer device (which may be a personal computer, a server, a network device, or the like) to perform all or a part of the steps of the method in each embodiment of the present disclosure. The foregoing storage medium includes: any medium that can store program code, such as a USB flash drive, a removable hard disk, a ROM, a RAM, a magnetic disk, or an optical disc.

A person of ordinary skill in the art may understand that all or a part of the procedures of the foregoing method embodiments may be implemented by related hardware controlled by a computer program. The program may be stored in a computer-readable storage medium. When the program is executed, the procedures of the foregoing method embodiments may be performed. The storage medium may include a magnetic disk, an optical disc, a read-only memory (Read-Only Memory, ROM), a random access memory (Random Access Memory, RAM), or the like.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the related art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A model determining method, comprising:
running, by a first device, a plurality of artificial intelligence AI models in parallel, wherein functions implemented by models in the plurality of AI models are the same;
evaluating, by the first device, running results of the plurality of AI models running in parallel, to obtain an evaluation result; and
determining, by the first device, a target model from the plurality of AI models based on the evaluation result.

2. The method according to claim 1, wherein the running, by a first device, a plurality of AI models in parallel comprises:
running, by the first device, the plurality of AI models in parallel based on a trigger condition, wherein the trigger condition comprises at least one of the following:
at intervals of a preset time period;
first information sent by a second device is received, wherein the first information is used to instruct the first device to run the plurality of AI models in parallel; and
a target event is detected.

3. The method according to claim 2, wherein the target event comprises one of the following:
first performance of a first AI model currently used by the first device is less than or equal to a first threshold, wherein the first AI model is a model in the plurality of AI models, and an AI model with high first performance is better than an AI model with low first performance;
a first statistical count is greater than or equal to a first count threshold, wherein the first statistical count is a count of times that the first performance of the first AI model is less than or equal to a second threshold in a first preset time period;
a second statistical count is less than or equal to a second count threshold, wherein the second statistical count is a count of times that the first performance of the first AI model is greater than or equal to a third threshold in a second preset time period;
first duration is greater than or equal to a first time threshold, wherein the first duration is duration in which the first performance of the first AI model is less than or equal to a fourth threshold;
second duration is less than or equal to a second time threshold, wherein the second duration is duration in which the first performance of the first AI model is greater than or equal to a fifth threshold;
second performance of the first AI model is greater than or equal to a sixth threshold, wherein an AI model with low second performance is better than an AI model with high second performance;
a third statistical count is greater than or equal to a third count threshold, wherein the third statistical count is a count of times that the second performance of the first AI model is greater than or equal to a seventh threshold in a third preset time period;
a fourth statistical count is less than or equal to a fourth count threshold, wherein the fourth statistical count is a count of times that the second performance of the first AI model is less than or equal to an eighth threshold in a fourth preset time period;
third duration is greater than or equal to a third time threshold, wherein the third duration is duration in which the second performance of the first AI model is greater than or equal to a ninth threshold; and
fourth duration is less than or equal to a fourth time threshold, wherein the fourth duration is duration in which the second performance of the first AI model is less than or equal to a tenth threshold.

4. The method according to claim 2, wherein after the running, by the first device, the plurality of AI models in parallel based on a trigger condition, the method further comprises:
in a case that the trigger condition comprises that the target event is detected, sending, by the first device, second information to the second device, wherein the second information is used to indicate that the first device runs the plurality of AI models in parallel.

5. The method according to claim 1, wherein the plurality of AI models comprise at least one of the following:
an AI model running in the first device before running of the plurality of AI models in parallel;
an AI model prestored by the first device;
an AI model received by the first device from a second device; and
a model derived by the first device based on a second AI model, wherein the second AI model comprises an AI model obtained by the first device.

6. The method according to claim 1, wherein the evaluation comprises evaluating an output result of a third AI model, or evaluating a final result obtained based on an output result of a third AI model, wherein the third AI model is any one of the plurality of AI models running in parallel.

7. The method according to claim 1, wherein after the determining a target model from the plurality of AI models based on the evaluation result, the method further comprises:
in a case that the target model meets a preset condition, performing, by the first device, a model switching operation, wherein the model switching operation comprises stopping using a first AI model, and using the target model, wherein the first AI model is an AI model currently used by the first device, and the first AI model is a model in the plurality of AI models.

8. The method according to claim 7, wherein the preset condition comprises at least one of the following:
a difference between first performance of the target model and first performance of the first AI model is greater than or equal to a first threshold, wherein an AI model with high first performance is better than an AI model with low first performance, the target model is a model with highest first performance among other models, and the other models are models other than the first AI model in the plurality of AI models;
a first count is greater than or equal to a first count threshold, wherein the first count is a count of times that the difference between the first performance of the target model and the first performance of the first AI model is greater than or equal to a second threshold in a first preset time period;
a second count is less than or equal to a second count threshold, wherein the second count is a count of times that the difference between the first performance of the target model and the first performance of the first AI model is less than or equal to a third threshold in a second preset time period;
fifth duration is greater than or equal to a fifth time threshold, wherein the fifth duration is duration in which the difference between the first performance of the target model and the first performance of the first AI model is greater than or equal to a fourth threshold;
sixth duration is less than or equal to a sixth time threshold, wherein the sixth duration is duration in which the difference between the first performance of the target model and the first performance of the first AI model is less than or equal to a fifth threshold;
a ratio of the first performance of the target model to the first performance of the first AI model is greater than or equal to a sixth threshold;
a third count is greater than or equal to a third count threshold, wherein the third count is a count of times that the ratio of the first performance of the target model to the first performance of the first AI model is greater than or equal to a seventh threshold in a third preset time period;
a fourth count is less than or equal to a fourth count threshold, wherein the fourth count is a count of times that the ratio of the first performance of the target model to the first performance of the first AI model is less than or equal to an eighth threshold in a fourth preset time period;
seventh duration is greater than or equal to a seventh time threshold, wherein the seventh duration is duration in which the ratio of the first performance of the target model to the first performance of the first AI model is greater than or equal to a ninth threshold; and
eighth duration is less than or equal to an eighth time threshold, wherein the eighth duration is duration in which the ratio of the first performance of the target model to the first performance of the first AI model is less than or equal to a tenth threshold.

9. The method according to claim 7, wherein the preset condition comprises one of the following:
a difference between second performance of the target model and second performance of the first AI model is less than or equal to an eleventh threshold, wherein an AI model with low second performance is better than an AI model with high second performance, the target model is a model with lowest second performance among other models, and the other models are models other than the first AI model in the plurality of AI models;
a fifth count is greater than or equal to a fifth count threshold, wherein the fifth count is a count of times that the difference between the second performance of the target model and the second performance of the first AI model is less than or equal to a twelfth threshold in a fifth preset time period;
a sixth count is less than or equal to a sixth count threshold, wherein the sixth count is a count of times that the difference between the second performance of the target model and the second performance of the first AI model is greater than or equal to a thirteenth threshold in a sixth preset time period;
ninth duration is greater than or equal to a ninth time threshold, wherein the ninth duration is duration in which the difference between the second performance of the target model and the second performance of the first AI model is less than or equal to a fourteenth threshold;
tenth duration is less than or equal to a tenth time threshold, wherein the tenth duration is duration in which the difference between the second performance of the target model and the second performance of the first AI model is greater than or equal to a fifteenth threshold;
a ratio of the second performance of the target model to the second performance of the first AI model is less than or equal to a sixteenth threshold;
a seventh count is greater than or equal to a seventh count threshold, wherein the seventh count is a count of times that the ratio of the second performance of the target model to the second performance of the first AI model is less than or equal to a seventeenth threshold in a seventh preset time period;
an eighth count is less than or equal to an eighth count threshold, wherein the eighth count is a count of times that the ratio of the second performance of the target model to the second performance of the first AI model is less than or equal to an eighteenth threshold in an eighth preset time period;
eleventh duration is greater than or equal to an eleventh time threshold, wherein the eleventh duration is duration in which the ratio of the second performance of the target model to the second performance of the first AI model is less than or equal to a nineteenth threshold; and
twelfth duration is less than or equal to a twelfth time threshold, wherein the twelfth duration is duration in which the ratio of the second performance of the target model to the second performance of the first AI model is greater than or equal to a twentieth threshold.

10. The method according to claim 7, wherein after the performing, by the first device, a model switching operation in a case that the target model meets a preset condition, the method further comprises:
sending, by the first device, model switching information to a second device, wherein the model switching information comprises at least one of a switch flag, an identifier of the first AI model, and an identifier of the target model.

11. The method according to claim 4 or 10, wherein in a case that the first device is a terminal and that the second device is a network-side device, first target information sent by the first device to the second device is carried in one of the following signaling or information:
layer 1 signaling of a physical uplink control channel PUCCH;
MSG 1 of a physical random access channel PRACH;
MSG 3 of the PRACH;
MSG A of the PRACH; and
information of a physical uplink shared channel PUSCH, wherein
the first target information comprises the second information or the model switching information.

12. The method according to claim 4 or 10, wherein in a case that the first device is a first terminal and that the second device is a second terminal, first target information sent by the first device to the second device is carried in one of the following signaling or information:
Xn interface signaling;
PC5 interface signaling;
information of a physical sidelink control channel PSCCH;
information of a physical sidelink shared channel PSSCH;
information of a physical sidelink broadcast channel PSBCH;
information of a physical sidelink discovery channel PSDCH; and
information of a physical sidelink feedback channel PSFCH, wherein
the first target information comprises the second information or the model switching information.

13. The method according to claim 2 or 7, wherein in a case that the first device is a terminal and that the second device is a network-side device, second target information is sent by the second device to the first device, and the second target information is carried in one of the following signaling or information:
a medium access control control element MAC CE;
a radio resource control RRC message;
a non-access stratum NAS message;
a management and orchestration message;
user plane data;
downlink control information DCI information;
a system information block SIB;
layer 1 signaling of a physical downlink control channel PDCCH;
information of a physical downlink shared channel PDSCH;
MSG 2 of a PRACH;
MSG 4 of the PRACH; and
MSG B of the PRACH, wherein
the second target information comprises the trigger condition or the preset condition.

14. The method according to claim 2 or 7, wherein in a case that the first device is a first terminal and that the second device is a second terminal, second target information is sent by the second device to the first device, and the second target information is carried in one of the following signaling or information:
Xn interface signaling;
PC5 interface signaling;
information of a PSCCH;
information of a PSSCH;
information of a PSBCH;
information of a PSDCH; and
information of a PSFCH, wherein
the second target information comprises the trigger condition or the preset condition.

15. The method according to claim 1, wherein the plurality of AI models running in parallel comprise a same input.

16. An information transmission method, comprising:
sending, by a second device, first information to a first device, wherein the first information is used to instruct the first device to run a plurality of AI models in parallel, and functions implemented by models in the plurality of AI models are the same; or
receiving, by a second device, second information sent by a first device, wherein the second information is used to indicate that the first device runs the plurality of AI models in parallel.

17. The method according to claim 16, wherein the plurality of AI models comprise at least one of the following:
an AI model running in the first device before running of the plurality of AI models in parallel;
an AI model prestored by the first device;
an AI model received by the first device from the second device; and
a model derived by the first device based on a second AI model, wherein the second AI model comprises an AI model obtained by the first device.

18. The method according to claim 16, wherein the method further comprises: receiving, by the second device, model switching information sent by the first device, wherein the model switching information comprises at least one of a switch flag, an identifier of a first AI model, and an identifier of a target model, and the first AI model is an AI model currently used by the first device.

19. The method according to claim 16 or 18, wherein in a case that the first device is a terminal and that the second device is a network-side device, the second information or the model switching information is carried in one of the following signaling or information:
layer 1 signaling of a physical uplink control channel PUCCH;
MSG 1 of a physical random access channel PRACH;
MSG 3 of the PRACH;
MSG A of the PRACH; and
information of a physical uplink shared channel PUSCH.

20. The method according to claim 16 or 18, wherein in a case that the first device is a first terminal and that the second device is a second terminal, the second information or the model switching information is carried in one of the following signaling or information:
Xn interface signaling;
PC5 interface signaling;
information of a physical sidelink control channel PSCCH;
information of a physical sidelink shared channel PSSCH;
information of a physical sidelink broadcast channel PSBCH;
information of a physical sidelink discovery channel PSDCH; and
information of a physical sidelink feedback channel PSFCH.

21. The method according to claim 16, wherein in a case that the first device is a terminal and that the second device is a network-side device, the first information is carried in one of the following signaling or information:
a medium access control control element MAC CE;
a radio resource control RRC message;
a non-access stratum NAS message;
a management and orchestration message;
user plane data;
downlink control information DCI information;
a system information block SIB;
layer 1 signaling of a physical downlink control channel PDCCH;
information of a physical downlink shared channel PDSCH;
MSG 2 of a PRACH;
MSG 4 of the PRACH; and
MSG B of the PRACH.

22. The method according to claim 16, wherein in a case that the first device is a first terminal and that the second device is a second terminal, the first information is carried in one of the following signaling or information:
Xn interface signaling;
PC5 interface signaling;
information of a PSCCH;
information of a PSSCH;
information of a PSBCH;
information of a PSDCH; and
information of a PSFCH.

23. The method according to claim 16, wherein the plurality of AI models running in parallel comprise a same input.

24. A model determining apparatus, comprising:
a running module, configured to run a plurality of artificial intelligence AI models in parallel, wherein functions implemented by models in the plurality of AI models are the same;
a determining module, configured to evaluate running results of the plurality of AI models running in parallel, to obtain an evaluation result; and
a selection module, configured to determine a target model from the plurality of AI models based on the evaluation result.

25. The apparatus according to claim 24, wherein the running module is configured to run the plurality of AI models in parallel based on a trigger condition, wherein the trigger condition comprises at least one of the following:
at intervals of a preset time period;
first information sent by a second device is received, wherein the first information is used to instruct to run the plurality of AI models in parallel; and
a target event is detected.

26. An information transmission apparatus, comprising:
a first sending module, configured to send first information to a first device, wherein the first information is used to instruct the first device to run a plurality of AI models in parallel, and functions implemented by models in the plurality of AI models are the same; or
a first receiving module, configured to receive second information sent by a first device, wherein the second information is used to indicate that the first device runs the plurality of AI models in parallel.

27. The apparatus according to claim 26, wherein the plurality of AI models comprise at least one of the following:
an AI model running in the first device before running of the plurality of AI models in parallel;
an AI model prestored by the first device;
an AI model received by the first device from a second device; and
a model derived by the first device based on a second AI model, wherein the second AI model comprises an AI model obtained by the first device.

28. A first device, comprising a processor and a memory, wherein the memory stores a program or instructions capable of running on the processor, and when the program or instructions are executed by the processor, the steps of the model determining method according to any one of claims 1 to 15 are implemented.

29. A second device, comprising a processor and a memory, wherein the memory stores a program or instructions capable of running on the processor, and when the program or instructions are executed by the processor, the steps of the information transmission method according to any one of claims 16 to 23 are implemented.

30. A readable storage medium, wherein the readable storage medium stores a program or instructions, and when the program or instructions are executed by a processor, the steps of the method according to any one of claims 1 to 23 are implemented.
